# FASCICULE DE BREVET EUROPEEN

(11) **EP 0 780 185 B1**
(45) Date de publication et mention de la délivrance du brevet: **05.07.2000**
(21) Numéro de dépôt: 96119851.2
(22) Date de dépôt: 11.12.1996
(51) Int. Cl.: B23K 9/00

(54) **Procédé de soudage d'axes d'articulation sur des éléments destinés à former des maillons articulés d'un bracelet**
Verfahren zum Schweissen von Gelenkachsen auf Gelenkverbindungen eines Gliederarmband
Process for welding articulation axis on articulated links of a bracelet

(30) Priorité: 22.12.1995 CH 365295; 17.01.1996 FR 9600490
(43) Date de publication de la demande: 25.06.1997
(73) Titulaire: WERTHANOR S.A., CH-2400 Le Locle (CH)
(72) Inventeur: Ecoffet, Roger, 25130 Villers-le-Lac (FR); Eray, Joseph, 2855 Glovelier (CH); Wenger, Sylvain, 1291 Commugny (CH)
(74) Mandataire: Ravenel, Thierry Gérard Louis

(56) Documents cités:
- FR-A- 626 532
- US-A- 4 468 553
- PATENT ABSTRACTS OF JAPAN vol. 8, no. 160 (M-312) [1597] , 25 Juillet 1984 & JP 59 056987 A (MIZUMOTO KIKAI SEISAKUSHO K.K.), 2 Avril 1984,

## Description

La présente invention concerne un procédé de soudage d'axes d'articulation sur des éléments destinés à former des maillons articulés d'un bracelet, notamment d'un bracelet de montre.

On connaît déjà des bracelets métalliques comprenant des maillons articulés formés chacun d'un ou plusieurs éléments, les maillons étant reliés entre eux au moyen d'axes d'articulation disposés dans des passages prévus à cet effet dans les faces latérales des maillons. Chaque axe est fixé sur un des maillons et articulé sur le maillon voisin. La fixation de l'axe sur le maillon peut être réalisée de différentes manières, à savoir par chassage, vissage ou encore par soudage.

Le chassage et le vissage des axes sur les maillons présentent le risque que les axes se déchassent respectivement se dévissent au cours du temps et conduisent à une désolidarisation intempestive des maillons, pouvant conduire à la perte du bracelet et le cas échéant de la montre attachée à celui-ci. On préfère donc généralement le soudage, qui procure une fixation sûre et définitive des axes sur les maillons.

Pour ce faire, une fois l'axe mis en place dans le passage du maillon, on chauffe localement l'extrémité visible de l'axe et la face latérale du maillon à souder, puis on apporte un métal ou un alliage métallique qui va jouer le rôle de soudure. Après cette opération de soudage, la face latérale du maillon est finie par des opérations successives de meulage et polissage qui donnent au maillon son aspect définitif.

Ce procédé de soudage des axes sur les maillons présente toutefois l'inconvénient de faire apparaître des défauts de coloration dans la zone de la soudure et de laisser subsister une auréole correspondant au pourtour de l'axe qui est due au métal d'apport. Par ailleurs, on a constaté que la fiabilité de ces soudures laisse à désirer. En effet, les soudures sont souvent sujettes à la corrosion, si bien que la soudure entre les axes et les maillons ne peut être garantie de façon absolue et qu'il existe de forts risques de rupture de la soudure et/ou de l'axe.

L'invention a pour but de remédier à tous ces inconvénients en fournissant un procédé qui ne laisse aucune trace visible sur les maillons à l'endroit de la soudure après polissage et satinage, qui puisse être aisément automatisé, qui fournisse une liaison sûre et très peu sensible aux problèmes de corrosion et qui soit d'une mise en oeuvre simple et peu coûteuse.

A cet effet, l'invention a donc pour objet un procédé de soudage d'axes d'articulation sur des maillons formés chacun d'un ou plusieurs éléments, les maillons étant reliés entre eux au moyen desdits axes d'articulation disposés dans des passages prévus à cet effet dans les maillons, chaque axe étant fixé sur un des maillons et articulé sur le maillon voisin, caractérisé en ce que la liaison de l'axe au maillon est faite par une opération de soudage à l'arc à l'aide d'une électrode en atmosphère inerte sans apport de soudure et en ce que les axes d'articulation font saillie à partir de la face latérale des maillons avant l'opération de soudage.

Grâce à ce procédé de soudage, on obtient une soudure fiable car cette dernière, réalisée sous une atmosphère protégée, est quasiment insensible aux problèmes de corrosion. Par ailleurs, ce procédé élimine les problèmes de gestion du métal d'apport des procédés de soudage de l'art antérieur.

Selon une caractéristique préférée du procédé de l'invention, les parties saillantes des axes d'articulation présentent à leur extrémité une forme apte à définir une position centrale de l'arc par rapport audit axe.

Ainsi, l'arc électrique se produisant entre l'électrode et l'axe d'articulation est centré sur ce dernier, et l'énergie apportée par l'arc entraîne ainsi la fusion homogène de l'axe et de la zone périphérique du maillon considéré.

D'autres caractéristiques et avantages de l'invention seront mieux décrits ci-après à l'aide de la description suivante d'un exemple de réalisation de mise en oeuvre du procédé de soudage selon l'invention, donné à titre purement illustratif en référence aux dessins annexés, dans lesquels :
- la figure 1 est une vue représentant un bracelet à maillons articulés en position sur une machine à souder à l'arc sous atmosphère inerte, dont les axes d'articulations sont prêts à être soudés selon le procédé de l'invention;
- les figures 2, 3 et 4 représentent des coupes partielles d'un maillon de bracelet et de son axe d'articulation à différentes étapes du procédé de soudage de l'invention; et
- les figures 5 et 6 montrent deux variantes de réalisation d'un axe d'articulation adapté à la mise en oeuvre du procédé de l'invention.

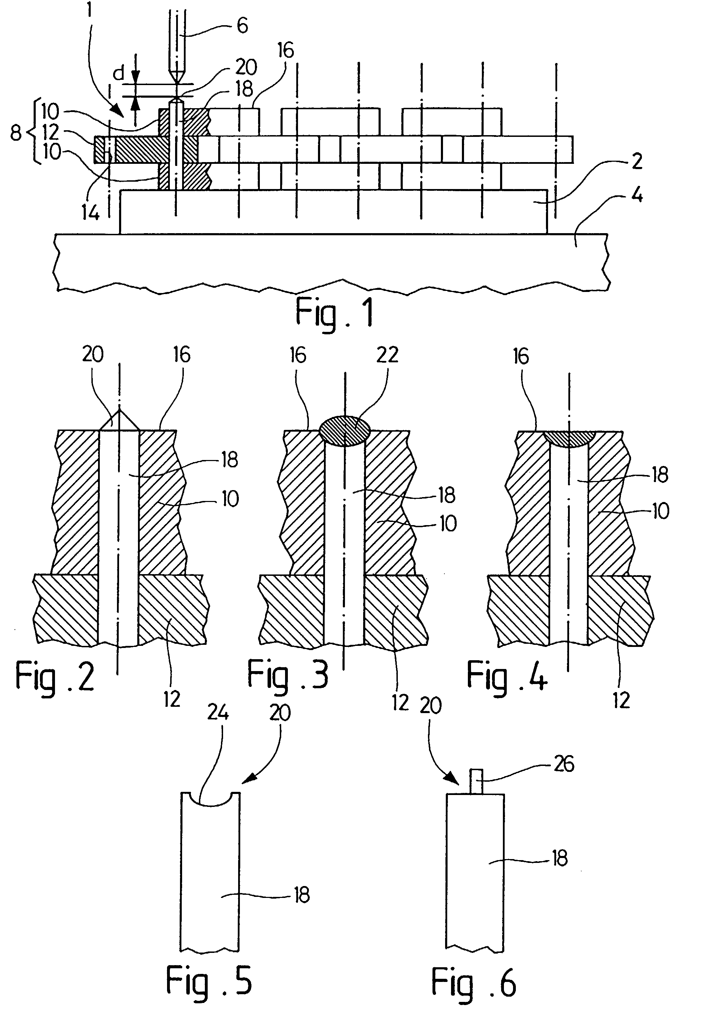

En se référant à la figure 1, on voit un bracelet désigné par la référence générale 1, posé sur une table de support 2 d'un bâti 4 d'une machine à souder à l'arc sous atmosphère inerte comprenant une électrode 6. Une telle machine est vendu par exemple par la société Castolin sous le nom commercial Castolig 2000.

Dans l'exemple illustré, le bracelet 1 comprend des maillons 8 formés chacun de trois éléments de maillon, à savoir deux éléments de maillon latéraux 10 et un élément de maillon central 12 disposé en quinconce par rapport aux éléments de maillons latéraux 10. Les éléments de maillons 10 et 12 comportent chacun dans leur partie extrême un passage 14 débouchant dans leur face latérale 16 et recevant un axe d'articulation 18.

Pour des raisons de commodité, seul un axe d'articulation a été représenté au dessin, les autres axes d'articulation du bracelet étant symbolisés par des traits d'axes.

Les axes d'articulation 18 sont fixés aux éléments latéraux 10 des maillons 8. Ce sont donc les éléments centraux 12 des maillons 8 qui pivotent sur les axes d'articulation 18.

Selon l'invention, la liaison de l'axe d'articulation 18 sur les éléments latéraux 10 des maillons est réalisée par une opération de soudage à l'arc à l'aide d'une électrode en atmosphère inerte sans apport de soudure. L'énergie thermique pour le soudage est apportée par l'arc électrique produit entre l'extrémité libre de l'électrode et l'extrémité ou tête 20 de l'axe 18, conduisant à la fusion du métal des deux éléments à souder.

Typiquement, l'opération de soudage est réalisée sous une atmosphère d'argon avec une électrode de tungstène qui comporte de préférence une faible quantité de thorium, typiquement 4%.

Comme il ressort clairement des figures 1 et 2, les axes d'articulation 18 sont mis en place sur les maillons, avant l'opération de soudage et font saillie à partir de la face latérale 16 des éléments latéraux 10 des maillons 8 par leur tête de soudage 20.

Ainsi, la tête de soudage 20 fournit une certaine quantité de matière qui va se mélanger localement à la matière de l'élément 10 lors de la fusion locale de cet élément et de l'axe pour assurer une liaison sûre de entre eux. Après cette opération de soudage, l'excès de matière de l'axe d'articulation 18, que l'on peut voir à la figure 3 sous la forme d'un bourrelet 22, est éliminé au cours d'une opération de finition qui comprend une opération de mise aux dimensions de l'élément de maillon soudé et une opération de polissage.

A ce propos, on a pu constater qu'un rapport de la longueur saillante de l'axe d'articulation 18 à son diamètre égal à 1,2, conduisait à des soudures satisfaisantes.

Les parties saillantes ou tête de soudage 20 des axes 18 présentent une forme, par exemple conique (figure 2), apte à définir une position centrale et privilégiée de l'arc électrique par rapport à l'axe 18. De cette façon, on favorise la formation de l'arc entre l'électrode de la machine à souder en un point précis de l'axe et l'on évite que la soudure se décale par rapport à l'axe et conduise à une liaison imparfaite de l'axe avec l'élément de maillon.

Dans le cas des têtes de soudage 20 de forme conique, on notera que l'angle au sommet du cône varie en fonction du diamètre de l'axe à souder en augmentant avec un augmentation du diamètre de l'axe

A la figure 5 on a représenté un axe d'articulation 18 comprenant une autre forme de tête de soudage 20. Dans ce mode de réalisation, la tête soudage 20 comprend une dépression 24 dans sa face d'extrémité, la dépression 24 étant centrée sur l'axe longitudinal de l'axe 18.

A la figure 6 on a représenté un axe d'articulation 18 comprenant encore une autre forme de tête de soudage 20. Dans cet autre mode de réalisation, la tête de soudage 20 comprend un téton 26 centré sur l'axe longitudinal de l'axe 18.

Bien entendu, toute autre forme de tête de soudage permettant la formation d'un arc entre l'électrode et l'axe dans une position privilégiée centrée peut être envisagée.

On notera par ailleurs que la distance d (figure 1) séparant l'électrode de l'extrémité de l'axe 18 ou encore de la tête de soudage 20 joue un rôle important dans le procédé, et que cette distance doit être comprise entre 0,6 mm et 1 mm et est de préférence de 0,8 mm. Cette distance permet notamment de contrôler la quantité de métal mise en fusion dans la zone de soudage, ce qui est d'une grande importance compte tenu des épaisseurs relativement faibles en jeu dans le soudage d'axes d'articulation sur des maillons de bracelet. Pour fixer les idées, les diamètres des axes d'articulation sont généralement de l'ordre de 1,2 mm millimètres et les épaisseurs des maillons de bracelet sont de l'ordre de 2 mm.

Comme cela ressort de la figure 1 et pour éviter une coulée du métal des éléments latéraux 10 des maillons 8 et des axes d'articulation 18 au moment du soudage, ce qui aurait pour conséquence une qualité de soudure insatisfaisante, le ou les maillons 8 à souder sont positionnés sur leur chant sur la table de support 2 sensiblement horizontale de manière que les axes d'articulation 18 s'étendent perpendiculairement à la table de support 2. On notera à ce propos que la table de support 2 est formée d'un posage adapté à la forme particulière des maillons à souder.

A titre indicatif, pour le soudage d'axes d'articulation en acier sur des éléments de maillon également en acier, par exemple en X2CrNiMo18-14 (norme DIN) ayant un diamètre de 1,2 mm et des longueurs de dépassement des faces latérales 18 de 0,3 mm, les paramètres de soudage avec une électrode d'un diamètre typique de 1,6 mm sont les suivants. Le débit de gaz inerte circulant autour de l'électrode est typiquement de 6 litres/heure. l'intensité du courant permettant d'engendrer l'arc électrique entre l'électrode et la tête de l'axe à souder est comprise entre 20 et 25 A et typiquement de 23 A, et la durée de l'impulsion électrique réalisant le soudage est d'environ une seconde. On notera à ce propos que le flux de gaz inerte, ici l'argon, démarre typiquement environ 0,5 seconde avant l'impulsion de soudage et se poursuit après l'impulsion pendant un temps donné, typiquement environ 6 secondes.

Enfin on notera que le procédé de soudage selon l'invention présente l'avantage de pouvoir contrôler simplement de façon visuelle la qualité de la soudure. En effet, si aucune trace de la soudure de l'axe sur le maillon n'est visible après polissage la soudure est considérée bonne, en revanche si une trace, telle qu'une porosité peut être vue, la soudure est alors considéréé comme défectueuse.

## Revendications

1. Procédé de soudage d'axes d'articulation (18) sur des maillons (8) formés chacun d'un ou plusieurs éléments (10,12), les maillons étant reliés entre eux au moyen desdits axes d'articulation (18) disposés dans des passages (14) prévus à cet effet dans les maillons, chaque axe (18) étant fixé sur un des maillons (8) et articulé sur le maillon voisin, caractérisée en ce que la liaison de l'axe (18) au maillon (8) est faite par une opération de soudage à l'arc à l'aide d'une électrode (6) en atmosphère inerte sans apport de soudure et en ce que lesdits axes d'articulation (18), ont des extrémités (20) en saillie à partir des faces latérales (16) des maillons, avant l'opération de soudage.

2. Procédé de soudage selon la revendication 1, caractérisé en ce que les parties saillantes (20) des axes d'articulation (18) présentent à leur extrémité une forme apte à définir une position centrale de l'arc par rapport audit axe (18).

3. Procédé de soudage selon la revendication 2, caractérisé en ce que ladite forme est conique.

4. Procédé de soudage selon la revendication 2, caractérisé en ce que ladite forme comprend un téton central (26).

5. Procédé de soudage selon l'une quelconque des revendications précédentes, caractérisé en ce qu'au moment du soudage, le ou les maillons (8) sont positionnés sur leur chant sur un support sensiblement horizontal de manière que les axes d'articulation (18) s'étendent perpendiculairement audit support (4).

6. Procédé de soudage selon l'une des revendications précédentes, caractérisé en ce que ladite opération de soudage est effectuée avec une électrode (6) de tungstène sous une atmosphère d'argon.

7. Procédé de soudage selon la revendication 6, caractérisé en ce que ladite électrode (6) comprend une faible quantité de thorium, et de préférence 4%.

8. Procédé de soudage selon l'une des revendications précédentes, caractérisé en ce que la distance séparant l'électrode (6) de l'axe à souder est comprise entre 0,6 et 1 mm et est de préférence égale à 0,8 mm.

9. Procédé de soudage selon l'une quelconque des revendications précédentes, caractérisé en ce que les maillons (8) et les axes d'articulation (18) sont réalisée en acier et en ce que le temps de soudure est d'une seconde à une intensité de courant d'arc comprise entre 20 et 25 A et de préférence 23 A.

10. Procédé selon l'une des revendications précédentes caractérisé en ce qu'après l'opération de soudage, la face du maillon (16) est soumise à une opération de polissage.

## Patentansprüche

1. Verfahren zum Anschweißen von Gelenkachsen (18) an Glieder (8), die jeweils aus einem oder mehreren Elementen (10, 12) gebildet sind, wobei die Glieder untereinander mittels der Gelenkachsen (18) verbunden sind, die in hierzu in den Gliedern vorgesehenen Durchlässen (14) angeordnet sind, wobei jede Achse (18) an einem der Glieder (8) befestigt ist und am benachbarten Glied angelenkt ist, dadurch gekennzeichnet, daß die Verbindung der Achse (18) mit dem Glied (8) durch einen Lichtbogenschweißvorgang mit Hilfe einer Elektrode (6) in einer inerten Atmosphäre ohne Schweißeintrag erfolgt und daß die Gelenkachsen (18) vor dem Schweißvorgang Enden (20) besitzen, die von den Seitenflächen (16) der Glieder vorstehen.

2. Schweißverfahren nach Anspruch 1, dadurch gekennzeichnet, daß die vorstehenden Teile (20) der Gelenkachsen (18) an ihrem Ende eine Form aufweisen, die eine Mittelposition des Bogens in bezug auf die Achse (18) definieren kann.

3. Schweißverfahren nach Anspruch 2, dadurch gekennzeichnet, daß die Form konisch ist.

4. Schweißverfahren nach Anspruch 2, dadurch gekennzeichnet, daß die Form einen Mittelzapfen (26) aufweist.

5. Schweißverfahren nach einem der vorhergehenden Ansprüche, dadurch gekennzeichnet, daß zum Zeitpunkt des Schweißens das oder die Glieder (8) mit ihrer Fase an einem im wesentlichen horizontalen Träger positioniert sind, so daß sich die Gelenkachsen (18) senkrecht zum Träger (4) erstrecken.

6. Schweißverfahren nach einem der vorhergehenden Ansprüche, dadurch gekennzeichnet, daß der Schweißvorgang mit einer Wolframelektrode (6) in einer Argonatmosphäre ausgeführt wird.

7. Schweißverfahren nach Anspruch 6, dadurch gekennzeichnet, daß die Elektrode (6) eine geringe Menge Thorium, vorzugsweise 4 %, enthält.

8. Schweißverfahren nach einem der vorhergehenden Ansprüche, dadurch gekennzeichnet, daß der die Elektrode (6) von der zu verschweißenden Achse trennende Abstand im Bereich von 0,6 bis 1 mm liegt und vorzugsweise 0,8 mm beträgt.

9. Schweißverfahren nach einem der vorhergehenden Ansprüche, dadurch gekennzeichnet, daß die Glieder (8) und die Gelenkachsen (18) aus Stahl hergestellt sind und daß die Schweißzeit bei einer Lichtbogen-Stromstärke im Bereich von 20 bis 25 A und vorzugsweise 23 A eine Sekunde beträgt.

10. Verfahren nach einem der vorhergehenden Ansprüche, dadurch gekennzeichnet, daß nach dem Schweißvorgang die Fläche (16) des Gliedes einem Poliervorgang unterworfen wird.

## Claims

1. Method for welding hinge pins (18) onto links (8) each formed of one or more elements (10, 12), the links being connected to each other by means of said hinge pins (18) arranged in passages (14) provided for this purpose in the links, each pin (18) being fixed onto one of the links (8) and hinged onto the next link, characterized in that the connection of the pin (18) to the link (8) is made via an arc welding operation with the aid of an electrode (6) in an inert atmosphere without using a solder and in that said hinge pins (18) have ends (20) projecting from the lateral faces (16) of the links, before the welding operation.

2. Welding method according to claim 1, characterized in that the projecting parts (20) of the hinge pins (18) have at their end a shape capable of defining a central position of the arc with respect to said pin (18).

3. Welding method according to claim 2, characterized in that said shape is conical.

4. Welding method according to claim 2, characterized in that said shape comprises a central stud (26).

5. Welding method according to any of the preceding claims, characterized in that at the moment of welding, the link or links (8) are positioned on their edge on a substantially horizontal support so that the hinge pins (18) extend perpendicularly to said support (4).

6. Welding method according to any of the preceding claims, characterized in that said welding operation is effected with a tungsten electrode (6) in an argon atmosphere.

7. Welding method according to claim 6, characterized in that said electrode (6) includes a small quantity of thorium, preferably 4%.

8. Welding method according to any of the preceding claims, characterized in that the distance separating the electrode (6) from the pin to be welded is between 0.6 mm and 1 mm and is preferably equal to 0.8 mm.

9. Welding method according to any of the preceding claims, characterized in that the links (8) and the hinge pins (18) are made of steel and in that the welding time is one second at an arc current intensity comprised between 20 and 25 A and preferably equal to 23 A.

10. Method according to any of the preceding claims, characterized in that after the welding operation, the face (16) of the link undergoes a polishing operation.
